# EUROPEAN PATENT SPECIFICATION

(11) **EP 0 676 255 B1**
(45) Date of publication and mention of the grant of the patent: **07.01.1998**
(21) Application number: 95500048.4
(22) Date of filing: 07.04.1995
(51) Int. Cl.: B23K 7/10, F23N 5/02

(54) **A system for controlling fusion welding with filler material**
Steuersystem zum Schweissen mit Zusatzmetallen
Système de contrôle de soudage avec métal d'apport

(30) Priority: 07.04.1994 ES 9400746
(43) Date of publication of application: 11.10.1995
(73) Proprietor: KOBOL S.A., E-31350 Peralta (Navarra) (ES)
(72) Inventor: Montseny Banajes, Albert, E-08253 San Salvador de Guardiola (ES)
(74) Representative: Carpintero Lopez, Francisco

(56) References cited:
- EP-A- 0 129 952
- EP-A- 0 408 846
- WO-A-90/04482
- PATENT ABSTRACTS OF JAPAN vol. 7 no. 271 (M-260) ,3 December 1983 & JP-A-58 151961 (TOYOTA JIDOSHA K.K.) 9 September 1983,

## Description

### OBJECT OF THE INVENTION

As explained herein, the present invention relates to a system for controlling fusion welding, particularly devised to be applied to a manual or robotised torch and allowing elements of little thickness, made of copper, aluminium, brass, iron and others to be welded, ensuring that welding is of a certain a quality and repetitive and moreover ensuring a controlled safety in using the same.

### BACKGROUND OF THE INVENTION

The problems arising from welding with filler material in thin-walled parts are well-known for such welding must be made very precisely in order to prevent the flame applied from being excessive, in quality or in time, perforating the walls of the material being welded. This problem is even worse in the particular case of materials such as aluminium that provide no visible signs allowing the time when the filler material has melted to be told apart from the time when the actual part to be welded begins to melt (there is only a difference of 10° to 15°C between both melting points).

This problem is especially important in the field of batteries for cooling circuits and, in particular, in welding battery elbows already mounted upon the battery ducts, wherein when the torch flame is applied the oxygen lying within the elbows oxidises and their inner surface will therefore have impurities arising from oxidation that are frequently unacceptable. Nitrogen is usually inserted into the ducts to avoid such oxidation and yet this method cannot ensure an absolute cleanliness of the inner surfaces.

To solve this problem, for batteries as aforesaid, there is currently available a welding head having a gas premixing chamber and a double nozzle made of special materials, the nozzles being located on either side of the part to be welded, and having flame output holes that are especially designed as to size, position and method of production. With the head thus structured and applied simultaneously to the two end ducts of the elbow, welding is possible without the walls being internally oxidised, and a high heat value flame can be formed thereby to significantly reduce gas and oxygen consumption, allowing the same to be used in welding materials such as copper with a thickness of up to 0.25 mn. This is why it is very successfully used fitted on the grip of a robot to be automatically positioned, and copper-copper welding is possible by visual inspection of the operator (welding takes place until the elbow changes colour showing that it is close to melting) or by programming the welding times in the robot.

Robot time programming is inconvenient due to the little reliability inherent in the fact that there are sharp drops in the gas and/or oxygen pressure which means that the set and programmed welding time is unsuitable in these cases and welding is not therefore carried out correctly. This is why welding is usually performed only with the assistance of staff who visually control the process and advise the robot when to finish each welding procedure.

It has always been desirable in a large number of applications and, in particular, in the subject case of cooling batteries, to be able to replace copper with aluminium, and yet with aluminium the welding problem aforesaid is far worse inasmuch as there is no such warning colour change, and there is little margin between the melting point of the filler material and of the elbow material, wherefore a reliable welding is not possible by visual inspection due to the large quantity of flaws and hence material perforations that come about.

### DESCRIPTION OF THE INVENTION

The control system subject hereof has been devised to fully solve the problems aforesaid and lies in fitting a number of elements onto the torch aforesaid that allow the said torch to be turned into an intelligent fusion welding head, allowing the welding of elbows and the like to be fully automatic and controlled without there being any of the process being supervised by humans.

The subject control system is applicable not only to welding copper and aluminium but to materials of all kinds, such as iron and brass, with no perforations and automatically.

One of the characteristics of the subject system of the present invention, as defined in claim 1, lies in the use of a temperature detection sensor that allows the true temperature to be known at all times at a specific point of the part, using this to find the temperature of the flame in real time, detecting changes in the value thereof forthwith, whether they be due to 0₂ or gas drops, at various heat dissipations through the body of the heater, or due to room temperature changes. With these data the system is able to decide the precise time the torch flame needs to be applied, or to make the necessary changes in the gas and 0₂ flows, thereby successfully ensuring that every elbow or part to be welded receives the precise flame temperature for the time required, without any human intervention, ensuring a better welding quality (no perforations due to excess flame, nor poorly welded parts for want of flame) and ensuring that this process is repetitive and hence that the welds obtained are of standard quality.

However, though the function described above is of foremost importance with a view to obtaining a good welding, in a further embodiment the said temperature probe is used for two additional functions, namely:
- Detecting the presence or absence of an elbow or part to be welded. The system controls the temperature rise detected by the sensor and the failure to achieve a pre-established temperature after a set time obviously means that the flame temperature has not been transmitted through the part, because such is not at its working position.
- Detecting poor nozzle condition. In the presence of a part to be welded, the system assumes that after a set time the temperature of the part must achieve a given value and will otherwise check whether the pressures of the fluids are correct or whether such are bringing about a temperature shift. When the pressures are correct, the system warns that there must be some problem with, damage to or obstruction in the nozzle.

It seems clear from the description of the subject system that due to its situation the part temperature sensor withstands high temperatures, which effect will not allow a new reading to be made until such temperature drops sufficiently, and a waiting time will therefore be required which would slow the production chain down unnecessarily. To prevent this problem, air piping means are provided, governed by the system control, in order for cooling air to be injected onto the sensor to rapidly lower its temperature and allow this operation to take place while the torch is being positioned upon the next elbow to be welded, thereby fully avoiding time losses (with cooling air, temperature can be lowered 450°C in 300 seconds).

The subject system moreover allows the safety in using a torch of this kind to be enhanced, to which end a second temperature sensor fitted lies at the mixing chamber to detect forthwith any possible recession in the flame, acting through the control system to shut the gas and 0₂ valves immediately, thereby yielding a far speedier and hence safer reaction than mechanical flame recession systems. In view of its features, the system described, subject of the invention, allows the welding operations of elbows or thin-walled parts, made of materials such as copper, aluminium, iron, brass and others, to be fully robotised, but it is also applicable to hand torches allowing, for instance, any operator to make aluminium welding repairs locally with the resulting advantages and cost reductions.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is a schematic view of the said control system, and the connection thereof to the sensing devices and actuators fitted in the torch.

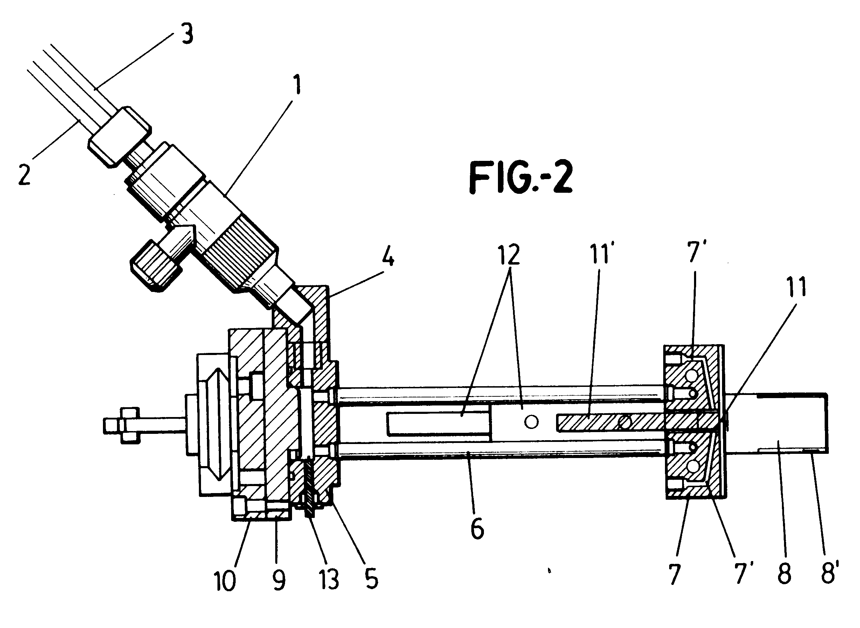

Figure 2.- Is a schematic sectional view of the said torch, with the flame recession and product temperature control sensors fitted at their respective locations.

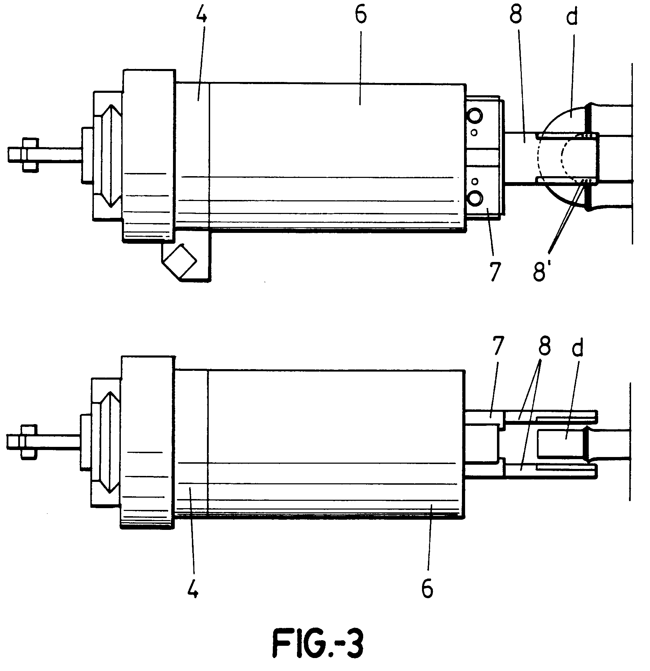

Figure 3.- Is a front and profile view of the said torch, showing how the part to be welded is acted upon.

### PREFERRED EMBODIMENT OF THE INVENTION

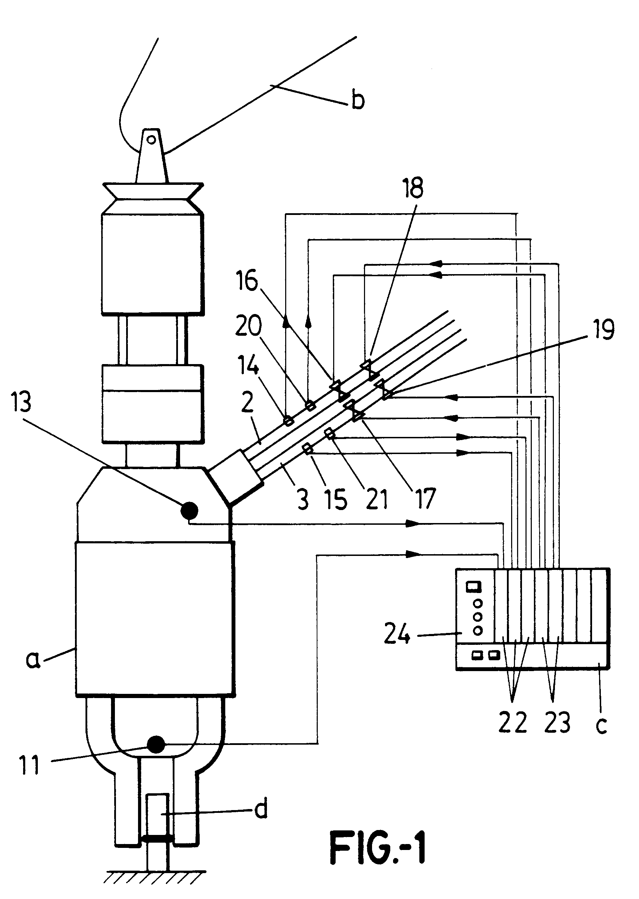

With reference to the figures, and in particular figure 1, the control system subject hereof comprises a number of signal sensing devices and actuating means fitted onto an improved torch (a), coupled to a robot (b) and a central external programmable system (c) assessing the data received and hence generating actuation data allowing the relevant operating sequences to be activated, keeping all process variables within the working ranges and generating the necessary warning signals to ensure a safe operation of the controlled system.

The improved torch (a) aforesaid is the apparatus for which an improved operation and control is sought, and comprises a conventional torch (a) that is provided through the relevant ducts (2) and (3) with the air and gas to be burned and which are driven by means of a coupling element (4) to a mixing chamber (5) where the mixture is homogenised and the homogeneous mixture formed is then taken through a body to a burner support (6) and finally to the two nozzles (7) where two special holes (8) are provided in order for the welding flame at the output to simultaneously impinge upon the two faces of the part to be welded (d). The rear of the mixing chamber (5) is closed by a cover (9) that allows the same to be fitted onto the robot arm through a fixing member (10).

The system proposed for the attainment of the functions described has the following devices fitted in or outside the torch (a):
- A heat sensor (11) lying on a pneumatic cylinder (12) and coated with a ceramic material (11'), arranged axially inside the torch body (6), its sensing portion lying between the burners (8) and being used firstly to control the part (d) and flame temperatures, having a precision equal to or in excess of 1% and at a response speed of 0.2 seconds and, secondly, acting as a spring keeping the part (d) and the robot (a) in contact at all times, providing the robot, as it reciprocates, with the reference of the position of the part to be welded (while it welds, the robot must reciprocate for if it stays still throughout the welding the parts will melt due to the high temperature applied) and damping the effect of the robot moving against the part (d) to be welded after the first contact is made between the two.
- A heat sensor (13) lying in the head mixing chamber (5) with technical features similar to the above, its function being to detect flame recession.
- Electronic gas and oxygen flow metres (14) and (15) respectively located on the gas and air input ducts (2) and (3) to control the consumption of the burners and the exact proportion of the mixture used.
- Proportional gas and air flow control valves (16) and (17) located on the gas and air input ducts (2) and (3) to control a greater or smaller opening of the said ducts.
- Gas and oxygen position control valves (18) and (19) and the relevant pressure metres (20) and (21).
- Devices for controlling the air driven through the burner support ducts towards the temperature sensor (11), thereby lowering the cooling time thereof.

In order to control all the data compiled, the use of a central programmable system (c) is provided, being a logic programmable or like controller, fitted with the required input (22) and output (23) cards and moreover having a data processing unit (24) having a specific program that allows data to be received and assessed, decisions to be made and commands to be sent to the actuators, in real time, in order that in the event of any process change, variation or trouble ensuing, the same may be suitably corrected forthwith or the process stopped.

We feel that the description need not be extended any longer for any expert in the art to have grasped the full scope of the invention and the advantages it offers.

The materials, shape, size and layout of the elements may be altered provided that this entails no modification of the essential features of the invention.

## Claims

1. A system for controlling fusion welding with filler material, comprising a torch having a mixing chamber (5), following the gas mixer (1), provided with a double nozzle (8), which consists of two nozzles disposed in parallel with gauged flame output holes (8'), preferably designed for the flame to impinge simultaneously upon both faces of the part to be welded (d), characterised in that inside the torch body (6) there is fitted a temperature sensor (11) coated with a ceramic material (11') and mounted upon a pneumatic cylinder (12) internally and axially to the body (6) such that the probe of the said sensor (11) will be located centrally between both nozzles (8), for sensing the temperature of a point of the part to be welded (d) at all times, and sending such temperature to a central control system (c) where it will be used to control the flame temperature at all times, cooling means (7') for the said temperature sensor (11) also being provided.

2. A system for controlling fusion welding with filler material according to claim 1, characterised in that the temperature sensor (11) constantly provides a signal that is compiled and assessed by the central control system (c) to yield the actuation values and necessary commands that are transmitted to the flow (16) and (17) and pressure (18) and (19) control valves for the gas pressures in the mixture to be controlled, also acting upon the time during which the flame is applied.

3. A system for controlling fusion welding with filler material according to any one of the above claims, characterised in that the temperature sensor (11) lies at the end of said pneumatic cylinder (12) for damping the vertical movements of a robot arm (a) carrying the torch as the robot arm moves up and down during the welding operation, keeping the sensor (11) in contact with the part to be welded (d) at all times.

4. A system for controlling fusion welding with filler material according to any one of the above claims, characterised in being fitted at the end of the nozzle (8) and surrounding the part temperature sensor (11) with two air piping means (7') that are commanded by the central control system (c) and inject air to cause the said sensor to be cooled down while the robot is passing from one part (d) to the next.

5. A system for controlling fusion welding with filler material according to any one of the above claims, characterised in that the temperature sensor (11) cooling means fitted at the end of the welding nozzle are such to lower the temperature of the said sensor down to a value that is significantly below the melting temperature of the material of which the part to be welded (d) is made.

6. A system for controlling fusion welding with filler material according to any one of the above claims, characterised in that the temperature sensor (11), in the absence of such part, sends a flame check signal that allows abnormal states of, damages to or defects in the nozzles (8) of the torch used to be known.

7. A system for controlling fusion welding with filler material according to any one of the above claims, characterised in that the temperature sensor (11) provides a signal that allows the presence or absence of the part to be welded (d) to be detected and relevant actions to be taken.

8. A system for controlling fusion welding with filler material according to any one of the above claims, characterised in being fitted with a temperature sensing device (13) arranged after the gas mixing chamber (5) which allows flame recession situations to be known through the central control system (c), allowing the said gas input ducts (2) and (3) to be shut.

## Patentansprüche

1. Steuersystem zum Schweißen mit Zusatzmetallen, bestehend aus einem mit einer Mischkammer (5) ausgestatteten, der Gasmischvorrichtung (1) nachgeschalteten Schweißbrenner, einer aus zwei parallel angeordneten Düsen gebildeten Doppeldüse (8) mit geeichten Öffnungen (8') für den Austritt der Flamme, die speziell dafür bestimmt sind, die Flamme gleichzeitig auf beide Seiten des zu schweißenden Werkstücks (d) zu richten, dadurch gekennzeichnet, daß im Körper (6) des Schweißbrenners ein mit Keramikmaterial (11') verkleideter Temperaturfühler (11) vorgesehen ist, der in einem im Körper (6) axial zu diesem verlaufenden Pneumatikzylinder (12) in der Weise angeordnet wird, daß sich die Sonde des Fühlers (11) mittig zwischen den beiden Düsen (8) befindet, um die Temperatur eines Punktes des zu schweißenden Werkstücks (d) zu jeder Zeit aufnehmen und einem zentralen Steuersystem (c) zuleiten zu können das, ausgehend von dieser Temperatur, in jedem Moment die Flammentemperatur steuert, woneben auch Mittel (7') zur Kühlung des erwähnten Temperaturfühlers (11) vorgesehen sind.

2. Steuersystem zum Schweißen mit Zusatzmetallen, nach Anspruch 1 dadurch gekennzeichnet, daß der Temperaturfühler (11) ständig ein Signal abgibt, das nach Aufnahme und Auswertung durch das zentrale Steuersystem (c) die erforderlichen Verfahrenswerte und Befehle zur Verfügung stellt, die den Ventilen zur Regelung der Menge (16) (17) und des Drucks (18) (19) zugeführt werden und den Gasdruck der Mischung steuern sowie die Zeit steuern, während welcher die Flamme aufgebracht wird.

3. Steuersystem zum Schweißen mit Zusatzmetallen, nach einem der vorstehenden Ansprüche dadurch gekennzeichnet, daß der Temperaturfühler (11) am Ende des erwähnten Pneumatikzylinders (12) angebracht wird, um die vertikalen Bewegungen eines Roboterarms (a) aufzunehmen, der bei seiner Auf- und Abbewegung während des Schweißvorgangs die Flamme mitnimmt und den Fühler (11) ständig mit dem zu schweißenden Werkstück (d) in Kontakt hält.

4. Steuersystem zum Schweißen mit Zusatzmetallen, nach einem der vorstehenden Ansprüche dadurch gekennzeichnet, daß am Ende der Düse (8), um den Temperaturfühler (11) des Werkstücks herum,, Luftführungsmittel (7') vorgesehen sind, die vom zentralen Steuersystem (c) gesteuert werden und Luft einspritzen, um den Fühler zu kühlen, während der Roboter von einem Werkstück (d) zum folgenden Werkstück übergeht.

5. Steuersystem zum Schweißen mit Zusatzmetallen, nach einem der vorstehenden Ansprüche dadurch gekennzeichnet, daß die am Ende der Schweißdüse angeordneten Kühlmittel für den Temperaturfühlers (11) des Werkstücks in der Weise wirken, daß sie die Temperatur des Fühlers auf einen Wert absenken, der beachtlich unter der Schmelztemperatur des Materials des zu schweißenden Werkstücks (d) liegt.

6. Steuersystem zum Schweißen mit Zusatzmetallen, nach den vorstehenden Ansprüchen dadurch gekennzeichnet, daß der Temperaturfühler (11) dann, wenn das Werkstück nicht vorhanden ist, ein Flammenprüfsignal abgibt, das es ermöglicht, unregelmäßige Zustände, Beschädigungen oder Mängel an den Düsen (8) des eingesetzten Schweißbrenners festzustellen.

7. Steuersystem zum Schweißen mit Zusatzmetallen, nach einem der vorstehenden Ansprüche dadurch gekennzeichnet, daß der Temperaturfühler (11) des Werkstücks ein Signal abgibt, das es ermöglicht, die Anwesenheit oder das Fehlen des zu schweißenden Werkstücks (d) festzustellen und dementsprechend vorzugehen.

8. Steuersystem zum Schweißen mit Zusatzmetallen, nach einem der vorstehenden Ansprüche dadurch gekennzeichnet, daß es einen im Anschluß an die Gasmischkammer (5) angeordneten Temperaturgeber (13) enthält, der es ermöglicht, Flammenrückschlagsituationen über das zentrale Steuersystem (c) zu erkennen und auf den Verschluß der genannten Gaszuströmleitungen (2) (3) einzuwirken.

## Revendications

1. Système de contrôle de soudage au feu avec métal d'apport, qui comprend un chalumeau pourvu d'une chambre de mélange (5), à la suite du mélangeur à gaz (1), incorporant une paire de buses (8) qui consiste en deux buses placées parallèlement avec des orifices de sortie de flamme calibrés (8'), destinés de préférence à faire agir la flamme en même temps sur les deux faces de la pièce à souder (d). Ce système est caractérisé par le fait d'incorporer, à l'intérieur du corps du chalumeau (6), un détecteur de température (11), recouvert d'une matière céramique (11'), et monté dans un cylindre pneumatique (12) intérieurement axial au corps (6), de sorte que la sonde de ce détecteur (11) demeure située en position centrale, entre les deux buses (8), pour capter à tout moment la température d'un point de la pièce à souder (d), en envoyant cette température à un système de contrôle central (c), qui contrôle à partir de cette pièce la température de flamme à tout moment, alors que l'on aura prévu également des moyens de refroidissement (7') de ce détecteur de température (11).

2. Système de contrôle de soudage au feu avec métal d'apport, conformément à la 1ère revendication. Ce système est caractérisé par le fait que le détecteur de température (11) fournit constamment un signe qui, après avoir été recueilli et évalué par le système de contrôle central (c), fournit les valeurs d'action et des commandes nécessaires qui, une fois qu'il a été transmis aux vannes de réglage de débit (16) (17) et de pression (18) (19), contrôlent les pressions des gaz du mélange, agissant également sur le temps d'application de la flamme.

3. Système de contrôle de soudage au feu avec métal d'apport, conformément à l'une quelconque des revendications précédentes. Ce système est caractérisé par le fait que le détecteur de temérature (11) soit situé à l'extrémité du cylindre pneumatique mentionné (12), pour absorber les déplacements verticaux d'un bras du robot (a). Ce bras du robot porte la flamme lors de son mouvement ascendant et descendant lors de l'opération soudage en maintenant le détecteur (11) en contact permanent avec la pièce à souder (d).

4. Système de contrôle de soudage au feu avec métal d'apport, conformément à l'une quelconque des revendications précédentes. Ce système est caractérisé par le fait qu'il incorpore, à l'extrémité de la buse (8) et en entourant le détecteur de captation de température (11) de la pièce, des moyens respectifs de canalisation d'air (7'), qui injectent, alors qu'ils sont commandés par le système de contrôle central (c), de l'air pour provoquer le refroidissement du détecteur pendant le temps de passage du robot d'une pièce (d) à la suivante.

5. Système de contrôle de soudage au feu avec métal d'apport, conformément à l'une quelconque des revendications précédentes. Ce sytème est caractérisé par le fait que les moyens de refroidissement du détecteur de température (11) de la pièce, incorporés à l'extrémité de la buse de soudage soient tels qu'ils réduisent la température du détecteur jusqu'à une valeur sensiblement inférieure à la température de fusion de la matière qui constitue la pièce à souder (d).

6. Système de contrôle de soudage au feu avec métal d'apport, conformément à l'une quelconque des revendications précédentes. Ce système est caractérisé par le fait que le détecteur de température (11), en l'absence de la pièce, fournit un signe de vérification de flamme qui permet de connaître des états anormaux, des détériorations ou des défauts dans les buses (8) du chalumeau employé.

7. Système de contrôle de soudage au feu avec métal d'apport, conformément à l'une quelconque des revendications précédentes. Ce système est caractérisé par le fait que le détecteur de température (11), fournit un signe qui permet de détecter la situation de présence ou d'absence de la pièce à souder (d) et d'agir en conséquence.

8. Système de contrôle de soudage au feu avec métal d'apport, conformément à l'une quelconque des revendications précédentes. Ce système est caractérisé par le fait qu'il incorpore un capteur de température (13), positionné à la suite de la chambre de melange à gaz (5), qui permet de connaître à travers le système de contrôle central (c), des situations de recul de flamme, en agissant sur la fermeture de ces conduits d'entrée de gaz (2) (3).
